# EUROPÄISCHE PATENTANMELDUNG

(11) **EP 3 269 924 A1**
(43) Veröffentlichungstag der Anmeldung: **17.01.2018**
(21) Anmeldenummer: 16179383.1
(22) Anmeldetag: 14.07.2016
(51) Int. Cl.: F01D 5/02, F01D 5/06, B23K 9/02

(54) **LÄUFERWELLE UND VERFAHREN ZUM HERSTELLEN EINER LÄUFERWELLE**

(71) Anmelder: Siemens Aktiengesellschaft, 80333 München (DE)
(72) Erfinder: Brußk, Stefan, 45479 Mülheim an der Ruhr (DE); Kern, Torsten-Ulf, 46485 Wesel (DE); Luithle, Alexander, 44789 Bochum (DE)

(57) **Zusammenfassung**

Die Erfindung betrifft eine Läuferwelle (1) für einen Turbinenläufer einer Turbine, insbesondere einer Dampfturbine, aufweisend einen Wellengrundkörper (2) aus einem ersten Werkstoff und wenigstens einen auf den Wellengrundkörper aufgebrachten Ring (15) aus einem zweiten Werkstoff, wobei der zweite Werkstoff eine gleiche oder höhere Festigkeit und/oder eine höhere Korrosionsbeständigkeit als der erste Werkstoff aufweist, wobei an dem Ring (15) wenigstens eine Schaufelnut (18) ausgebildet ist, und wobei der Ring (15) mittels Engspaltschweißen stoffschlüssig mit dem Wellengrundkörper (2) verbunden ist.

## Beschreibung

Die Erfindung betrifft eine Läuferwelle für einen Turbinenläufer einer Turbine, insbesondere einer Dampfturbine.

Des Weiteren betrifft die Erfindung ein Verfahren zum Herstellen einer Läuferwelle eines Turbinenläufers einer Turbine, insbesondere einer Dampfturbine.

Eine Dampfturbine umfasst einen drehbar gelagerten Turbinenläufer, der eine Läuferwelle aufweist, an der mehrere Laufschaufelreihen axial beabstandet zueinander angeordnet sind. Die Laufschaufeln umfassen jeweils einen Laufschaufelfuß, der zur Befestigung der jeweiligen Laufschaufel an der Läuferwelle in eine der jeweiligen Laufschaufelreihe zugeordnete Schaufelnut an der Läuferwelle eingefügt ist. Üblicherweise weist der Laufschaufelfuß hierzu einen im Querschnitt tannenbaumförmig ausgebildeten Fußabschnitt auf, wobei die Schaufelnut im Querschnitt komplementär zu dem Fußanschnitt ausgebildet ist.

Turbinenläufer von Dampfturbinen, insbesondere Niederdruckdampfturbinen, unterliegen im Betrieb einer Dampfturbine verschiedenen Beanspruchungen. Beispielsweise treten sehr hohe Zugbeanspruchungen in den Schaufelnuten der axial außenliegenden Schaufelreihen auf. Zudem treten Korrosionsbeanspruchungen infolge des die Dampfturbine durchströmenden feuchten Dampfes auf, die in hoch belasteten Bereichen des Turbinenläufers eine Spannungsrisskorrosion fördern können.

Zusätzlich ist es wichtig, dass eine Herstellbarkeit von monolithischen Läuferwellen in Form von Monoblöcken bzw. von zur Ausbildung von Läuferwellen miteinander verbindbaren Wellenmodulen in den jeweils erforderlichen Abmaßen mit den entsprechenden werkstofftechnischen Eigenschaften gewährleistet ist. Die Werkstoffauswahl für eine komplette Läuferwelle bzw. für Wellenmodule folgt damit vorrangig den Anforderungen des höchst beanspruchten Bereichs der Läuferwelle. Ein solcher Bereich sollte unter Verwendung eines möglichst hochwertigen und damit aber auch kostenintensiven Werkstoffs hergestellt werden. Weniger stark beanspruchte Bereiche der Läuferwelle bzw. der Wellenmodule erfordern nicht die Verwendung eines derartigen hochwertigeren Werkstoffs. Daher stellt die Werkstoffauswahl für eine komplette Läuferwelle bzw. für Wellenmodule meistens einen Kompromiss zwischen einem kostenintensiveren und einem kostengünstigeren, den jeweiligen Anforderungen angepassten Werkstoff dar.

Bislang werden Läuferwellen aus einem Stück als Monoblock oder aus miteinander verschweißten, scheibenartigen bzw. zylindrischen Wellenmodulen gefertigt. Typische Werkstoffe für einen Niederdruckläuferbereich sind (2,8-3,5)NiCrMoV-Stähle, aber auch 1CrMoV-Stahl oder 2CrMoWV-Stahl. Solche Stähle werden für kombinierte Mitteldruck-Niederdruck-Läuferwellen verwendet, unterliegen aber Einschränkungen in den erzielbaren Eigenschaften als Funktion vom Läuferwellendurchmesser.

Höchste Festigkeiten bei besten Zähigkeiten bietet ein 3,5NiCrMoV Stahl. Aufgrund der großen Masse und des großen Durchmessers des jeweiligen Monoblocks bzw. Wellenmoduls kommen aber auch diese Werkstoffe wegen der angewendeten fertigungstechnischen Herstellverfahren, wie beispielsweise Schmieden und Wärmebehandlung zur Durchvergütung, an die Grenzen ihrer realisierbaren Festigkeiten und der Homogenität über den Querschnitt des Monoblocks bzw. Wellenmoduls. Eine weitere Ausbaustufe des 3,5NiCrMoV-Läuferwellenwerkstoffs ist die "Superclean"-Variante, welche jedoch durch die erforderliche Reinheit und den erhöhten Fertigungsaufwand deutlich kostenintensiver (ca. 10-20%) ist. Ein limitierender Faktor ist zudem die eingeschränkte Lieferantenbasis für diesen Werkstoff.

Bei einer Überarbeitung von langzeitig betriebsbeanspruchten Niederdruck-Läuferwellen bzw. von Läuferwellen, die Risse in den Schaufelnuten der axial außenliegenden Schaufelreihenstufen aufweisen, ist eine Ertüchtigung bzw. Rekonturierung korrosionsbeanspruchter Läuferwellen hinsichtlich einer statischen Festigkeit, einer Schwingfestigkeit (Low Cycle Fatigue-Anrisslastwechselzahl), einer zyklischen Fließkurve und einer Fehlstellenfreiheit bislang nicht mit den ursprünglich ausgelegten Eigenschaften des 3,5NiCrMoV-Werkstoffs möglich. Die sehr kostenintensive Möglichkeit der Aufbauschweißung ganzer Stufen von Schaufelnuten liefert nicht die gewohnten Eigenschaften des Schmiedewerkstoffs und bürgt das Risiko von Schweißfehlern. Hier bleibt entweder nur ein Weiterbetrieb bis zum Erreichen kritischer Risstiefen oder der komplette Austausch des Läuferwellenschmiedeteils.

Eine Aufgabe der Erfindung ist es, eine Läuferwelle für einen Turbinenläufer einer Turbine bereitzustellen, deren Eigenschaften auf kostengünstige Weise individuell an die jeweiligen Anforderungen angepasst sind.

Diese Aufgabe wird durch die unabhängigen Patentansprüche gelöst. Vorteilhafte Ausgestaltungen sind in der nachfolgenden Beschreibung, den abhängigen Patentansprüchen und den Figuren angegeben, die jeweils für sich genommen oder in verschiedener Kombination von wenigstens zwei Ausgestaltungen miteinander einen weiterbildenden, insbesondere auch bevorzugten oder vorteilhaften, Aspekt der Erfindung darstellen können.

Eine erfindungsgemäße Läuferwelle für einen Turbinenläufer einer Turbine, insbesondere einer Dampfturbine, umfasst einen Wellengrundkörper aus einem ersten Werkstoff und wenigstens einen auf den Wellengrundkörper aufgebrachten Ring aus einem zweiten Werkstoff, wobei der zweite Werkstoff eine gleiche oder höhere Festigkeit und/oder eine höhere Korrosionsbeständigkeit als der erste Werkstoff aufweist, wobei an dem Ring wenigstens eine Schaufelnut ausgebildet ist, und wobei der Ring mittels Engspaltschweißen stoffschlüssig mit dem Wellengrundkörper verbunden ist.

Erfindungsgemäß können Eigenschaften der Läuferwelle partiell, insbesondere in einem Niederdruckbereich, beispielsweise im Bereich der axial äußeren Schaufelnuten, an die jeweiligen Anforderungen und auftretenden Belastungen angepasst werden, indem wenigstens ein Ring an dem Wellengrundkörper angeordnet wird, dessen Werkstoffeigenschaften sich von den Werkstoffeigenschaften des Wellengrundkörpers unterscheiden und insbesondere hinsichtlich höherer mechanischer und/oder korrosiver Belastungen optimiert sind. Insbesondere können die Werkstoffeigenschaften des Rings im Wesentlichen unabhängig von den Werkstoffeigenschaften des Wellengrundkörpers im Hinblick auf mechanische und/oder korrosive Eigenschaften optimiert werden. Da der Einsatz eines hochfesten und/oder korrosionsbeständigeren und damit üblicherweise kostenintensiveren zweiten Werkstoffs auf den Ring beschränkt ist, kann der Wellengrundkörper optimiert und gegebenenfalls aus einem kostengünstigeren ersten Werkstoff hergestellt werden, was mit einer Kostenreduzierung im Vergleich zur herkömmlichen Monoblockfertigung einhergehen kann. Der erfindungsgemäße Einsatz des korrosionsträgeren bzw. korrosionsbeständigeren und/oder festeren zweiten Werkstoffs ist insbesondere im Bereich der Schaufelnuten von Turbinen mit hohem Nässeanteil in der Niederdruck-Abströmung von Vorteil.

Gemäß der Erfindung kann der Ring zur Ausbildung der kalten Niederdruck-Endschaufelnuten mit an den jeweiligen Anwendungsfall angepassten Werkstoffeigenschaften eingesetzt werden. Dazu wird der Ring mittels Engspaltschweißen stoffschlüssig am Umfang des Wellengrundkörpers befestigt. Der Ring bietet die Möglichkeit, den Werkstoff der Läuferwelle im Bereich der an dem Ring ausgebildeten Schaufelnut auf die jeweiligen Anforderungen, beispielsweise auf eine hohe statische Festigkeit, ein optimales LCF-Verhalten und/oder eine hohe Korrosionsbeständigkeit abzustimmen.

Durch das kleinere Volumen bzw. den kleineren Querschnitt des Rings kann dieser unter Verwendung konventioneller Schmiedeverfahren oder Walzverfahren homogener und mit höheren Festigkeiten, beispielsweise mit einem feinkörnigeren Gefüge, einem besseren Reinheitsgrad, verbesserten LCF-Eigenschaften und dergleichen, hergestellt werden, was bei einem herkömmlichen Monoblock oder Wellenmodul aufgrund des hierfür verwendeten Fertigungsweges und physikalischer Randbedingungen nicht möglich ist.

Durch die Erfindung kann im Bereich des Rings ein radialer Gradient der Werkstoffeigenschaften an der Läuferwelle generiert werden. Beispielsweise kann ein Gradient von der Oberfläche der Läuferwelle zu der Längsmittelachse der Läuferwelle erzeugt werden. Es können auch Mitteldruck-Niederdruck-Läuferwellen oder Hochdruck-Mitteldruck-Niederdruck-Läuferwellen als Monoblock aus (1-2)CrMoV ausgeführt und das Klauenmaterial der 0ten Schaufelreihe als Ring aufgebracht werden.

Die erfindungsgemäße Aufbringung von wenigstens einem Ring auf den Wellengrundkörper bietet zudem die Möglichkeit, Läuferwellen zu standardisieren, indem je nach Anwendungsfall verschieden dicke und/oder breite Ringe für die jeweilige Endstufengröße auf einen einheitlich dimensionierten Wellengrundkörper aufgebracht werden.

Der Wellengrundkörper kann im Zuge einer Neuherstellung hergestellt werden. Alternativ kann der Wellengrundkörper durch eine Bearbeitung, insbesondere durch Drehen, einer bereits vorhandenen, insbesondere gebrauchten, Läuferwelle ausgebildet werden, wobei ein instandzusetzender Abschnitt, an dem eine beschädigte Schaufelnut ausgebildet ist, abgetragen wird. Im Falle der Instandsetzung einer bereits eingesetzten, rissbehafteten Läuferwelle kann diese durch die Aufbringung des Rings auf den durch eine Bearbeitung der Läuferwelle hergestellten Wellengrundkörper rekonturiert werden. Der Wellengrundkörper kann als Monoblock oder aus miteinander verschweißten Wellenmodulen hergestellt sein. Der Ring hat im Vergleich zur Auftragschweißung mindestens die gleichen Eigenschaften wie die ursprüngliche Läuferwelle. Es ist somit eine Reparatur korrosiv geschädigter oder rissbehafteter Schaufelnuten einer herkömmlichen Läuferwelle kostengünstig möglich.

Die erfindungsgemäße Läuferwelle kann auch zwei oder mehrere entsprechend auf den Wellengrundkörper aufgebrachte Ringe aufweisen, an denen jeweils wenigstens eine Schaufelnut ausgebildet ist.

Der Ring ist bevorzugt über wenigstens eine mittels des Engspaltschweißens erzeugte Schweißnaht mit dem Wellengrundkörper verbunden, wobei die Schweißnaht axial außenliegender Außenabschnitte aus einem ersten Schweißgut und einen zwischen den Außenabschnitten liegenden Mittelabschnitt aus einem zweiten Schweißgut aufweist, und wobei das erste Schweißgut eine höhere Korrosionsbeständigkeit als das zweite Schweißgut aufweist. Hiernach kann zunächst eine Schweißnahtwurzel aus dem ersten Schweißgut hergestellt werden, die einen Außenabschnitt der Schweißnaht bildet. Anschließend kann der Mittelabschnitt der Schweißnaht unter Verwendung des zweiten Schweißguts hergestellt werden. Abschließend kann eine Decklage aus dem ersten Schweißgut hergestellt werden, die den anderen Außenabschnitt der Schweißnaht bildet. Das zweite Schweißgut kann eine höhere Festigkeit als das erste Schweißgut aufweisen. Somit ist es bei dieser Ausgestaltung der Läuferwelle möglich, einen anforderungsgerechten axialen Gradienten der Schweißnahteigenschaften zu generieren. Die Schweißnaht kann sich radial bis zu einer Tiefe der Läuferwelle bzw. einem entsprechenden Tiefenbereich erstrecken, der niedrigeren Belastungen ausgesetzt ist. Die Schweißnaht lässt sich aus einer radialen Position zerstörungsfrei, beispielsweise mittels Ultraschall prüfen, da eine günstige Orientierung des Schallbündels zu möglichen Anzeigen in der Schweißnaht (z.B. Flankenbindefehler) gegeben ist.

Bevorzugt ist der Ring durch Walzen oder Schmieden hergestellt. Insbesondere kann der Ring durch Ringwalzen hergestellt sein.

Die Läuferwelle umfasst bevorzugt wenigstens zwei zu einem Wellenende des Wellengrundkörpers hin versetzt angeordnete, auf den Wellengrundkörper aufgebrachte Ringe, wobei ein Außendurchmesser eines näher zu dem Wellenende angeordneten, den einen Ring tragenden Aufbringabschnitts des Wellengrundkörpers kleiner ist als ein Außendurchmesser eines entfernter zu dem Wellenende angeordneten, den anderen Ring tragenden Aufbringabschnitts des Wellengrundkörpers. Entsprechend ist ein Innendurchmesser des auf den näher zu dem Wellenende angeordneten Aufbringabschnitt aufgebrachten Rings kleiner als ein Innendurchmesser des auf den entfernter zu dem Wellenende angeordneten Aufbringabschnitt aufgebrachten Rings. Hierdurch wird gewährleistet, dass der Ring mit dem größeren Innendurchmesser auf den Wellengrundkörper in weiterer Entfernung zum Wellenende aufgefädelt werden kann.

Ein erfindungsgemäßes Verfahren zum Herstellen einer Läuferwelle eines Turbinenläufers einer Turbine, insbesondere einer Dampfturbine, umfasst die Schritte:
- Herstellen eines Wellengrundkörpers aus einem ersten Werkstoff;
- Herstellen von wenigstens einem Ring aus einem zweiten Werkstoff, wobei der zweite Werkstoff eine gleiche oder höhere Festigkeit und/oder eine höhere Korrosionsbeständigkeit als der erste Werkstoff aufweist;
- Aufbringen des Rings auf den Wellengrundkörper;
- stoffschlüssiges Verbinden des Rings mit dem Wellengrundkörper mittels Engspaltschweißen; und
- Ausbilden von wenigstens einer Schaufelnut an dem Ring.

Mit dem Verfahren sind die oben mit Bezug auf die Läuferwelle genannten Vorteile entsprechend verbunden. Insbesondere kann die Läuferwelle gemäß einer der genannten Ausgestaltungen oder einer beliebigen Kombination von wenigstens zwei dieser Ausgestaltungen miteinander unter Verwendung des Verfahrens hergestellt werden. Das Engspaltschweißen kann bei vertikal ausgerichtetem Wellengrundkörper und PA-Schweißposition oder bei horizontal ausgerichtetem Wellengrundkörper und PC-Schweißposition durchgeführt werden. Während des Engspaltschweißens kann der Ring mittels eines Rollengangs abgestützt werden.

Der Ring wird bevorzugt über wenigstens eine mittels des Engspaltschweißens erzeugte Schweißnaht stoffschlüssig mit dem Wellengrundkörper verbunden, wobei die Schweißnaht derart hergestellt wird, dass die Schweißnaht axial außenliegender Außenabschnitte aus einem ersten Schweißgut und einen zwischen den Außenabschnitten liegenden Mittelabschnitt aus einem zweiten Schweißgut aufweist, wobei das erste Schweißgut eine höhere Korrosionsbeständigkeit als das zweite Schweißgut aufweist. Mit dieser Ausgestaltung sind die oben mit Bezug auf die entsprechende Ausgestaltung der Läuferwelle genannten Vorteile entsprechend verbunden.

Eine Schweißnahtwurzel der Schweißnaht wird bevorzugt zumindest teilweise außerhalb eines Spalts zwischen dem Ring und dem Wellengrundkörper ausgebildet. Hierdurch ist die Schweißnahtwurzel teilweise oder vollständig außerhalb der Fertigkontur der Läuferwelle angeordnet. Durch eine nachfolgende Abtragung der axialen Schweißnahtenden und somit zumindest teilweise der Schweißnahtwurzel ergeben sich homogene mechanische Eigenschaften entlang der Schweißnaht.

Das Engspaltschweißen wird bevorzugt unter Verwendung von Elektronenstrahlschweißen durchgeführt. Das Elektronenstrahlschweißen wird vorzugsweise unter einem reduzierten Vakuum durchgeführt. Alternativ kann das Engspaltschweißen unter Verwendung von WIG-Schweißen oder MAG-Schweißen durchgeführt werden.

Das Engspaltschweißen wird bevorzugt von einer einem nächstliegend zu dem Ring angeordneten Wellenende des Wellengrundkörpers zugewandten Seite aus durchgeführt. Insbesondere kann der Ring von der näher zu dem Ring liegenden Kupplungsseite des Wellengrundkörpers aus in einem Zug mit dem Wellengrundkörper verschweißt werden.

Der Ring wird bevorzugt vor dem Engspaltschweißen über wenigstens ein Zentriermittel koaxial zu dem Wellengrundkörper ausgerichtet. Insbesondere kann der Wurzelbereich mit einer geeigneten Zentrierung versehen sein. Gegebenenfalls kann eine temporäre Schrumpfverbindung genutzt werden.

Bevorzugt wird zumindest der Ring nach Abschluss des Engspaltschweißens einer Wärmenachbehandlung unterzogen. Durch diese lokale Wärmenachbehandlung ist eine gezielte Einstellung von mechanischen Eigenschaften des Rings möglich. Der Wärmebehandlungszustand des Rings wird dabei so gewählt, dass dieser nach der Wärmenachbehandlung, bei der auch eine Wärmebehandlung der Schweißverbindung erfolgen kann, die erforderlichen mechanischen Eigenschaften besitzt.

Der Ring wird bevorzugt durch Walzen oder Schmieden hergestellt.

Der Ring wird bevorzugt mit einer Breite hergestellt, die größer als eine Sollbreite des Rings ist, wobei die Breite des Rings nach Abschluss des Engspaltschweißens und nach einer Prüfung des Rings durch Materialabtragung auf die Sollbreite reduziert wird. Die zunächst hergestellte Breite des Rings ist somit größer als die in diesem Bereich angestrebte Fertigkontur der Läuferwelle. Im Anschluss an die Prüfung des Rings nach einer Wärmebehandlung können die von der Fertigkontur der Läuferwelle abweichenden Werkstoffbereiche des Rings zur Reduzierung des Rings auf die Sollbreite abgetragen werden.

Bevorzugt werden wenigstens zwei Ringe zu einem Wellenende des Wellengrundkörpers hin versetzt auf den Wellengrundkörper aufgebracht, wobei der Wellengrundkörper derart hergestellt wird, dass ein Außendurchmesser eines näher zu dem Wellenende angeordneten, den einen Ring tragenden Aufbringabschnitts des Wellengrundkörpers kleiner ist als ein Außendurchmesser eines entfernter zu dem Wellenende angeordneten, den anderen Ring tragenden Aufbringabschnitts des Wellengrundkörpers. Mit dieser Ausgestaltung sind die oben mit Bezug auf die entsprechende Ausgestaltung der Läuferwelle genannten Vorteile entsprechend verbunden.

Im Folgenden wird die Erfindung unter Bezugnahme auf die anliegenden Figuren anhand einer bevorzugten Ausführungsform beispielhaft erläutert, wobei die nachfolgend dargestellten Merkmale sowohl jeweils für sich genommen, als auch in unterschiedlicher Kombination miteinander einen weiterbildenden oder vorteilhaften Aspekt der Erfindung darstellen können. Es zeigen:
- Fig. 1: einen schematischen Längsschnitt durch ein Ausführungsbeispiel für eine erfindungsgemäße Läuferwelle in einem anfänglichen Herstellungszustand;
- Fig. 2: einen schematischen Längsschnitt durch die in Fig. 1 gezeigte Läuferwelle in einem weiteren Herstellungszustand; und
- Fig. 3: einen schematischen Längsschnitt durch die in Fig. 1 gezeigte Läuferwelle in einem weiteren Herstellungszustand.

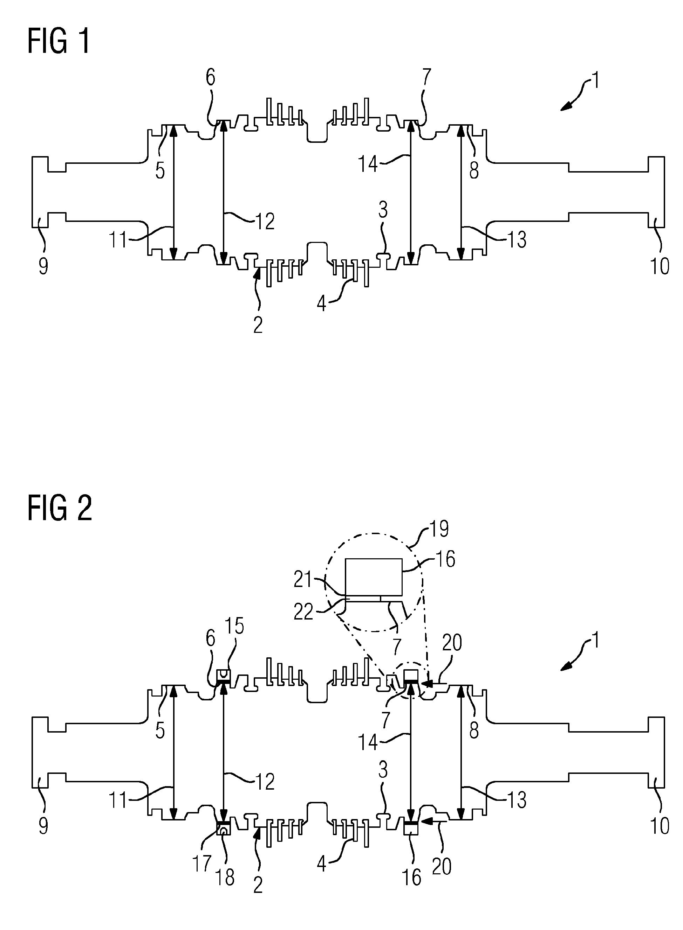

Fig. 1 zeigt einen schematischen Längsschnitt durch ein Ausführungsbeispiel für eine erfindungsgemäße Läuferwelle 1 für einen Turbinenläufer einer Turbine in einem anfänglichen Herstellungszustand.

Die Läuferwelle 1 umfasst einen Wellengrundkörper 2 aus einem ersten Werkstoff. An dem Wellengrundkörper 2 sind mehrere umlaufende Schaufelnuten 3 ausgebildet, die axial voneinander beabstandet sind. An mittleren Schaufelnuten 3 sind kurze Laufschaufeln 4 angeordnet.

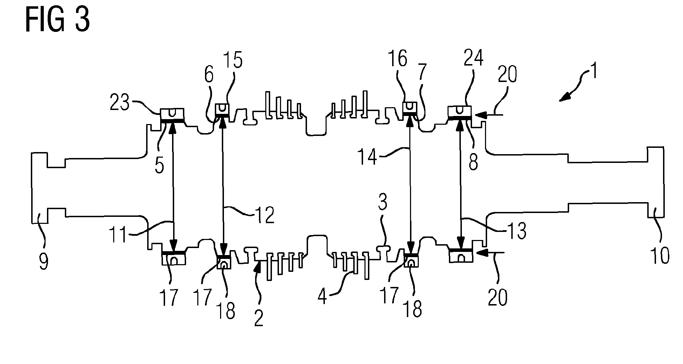

An dem Wellengrundkörper 2 sind vier Aufbringabschnitte 5 bis 8 ausgebildet, wobei die Aufbringabschnitte 5 und 6 näher zu dem links gezeigten Wellenende 9 des Wellengrundkörpers 2 und die Aufbringabschnitte 7 und 8 näher zu dem rechts gezeigten Wellenende 10 des Wellengrundkörpers 2 angeordnet sind. Ein Außendurchmesser 11 des näher zu dem Wellenende 9 angeordneten Aufbringabschnitts 5 ist kleiner als ein Außendurchmesser 12 des entfernter zu dem Wellenende 9 angeordneten Aufbringabschnitts 6. Ein Außendurchmesser 13 des näher zu dem Wellenende 10 angeordneten Aufbringabschnitts 8 ist kleiner als ein Außendurchmesser 14 des entfernter zu dem Wellenende 10 angeordneten Aufbringabschnitts 7. Die Außendurchmesser 11 und 13 bzw. 12 und 14 können gleich oder unterschiedlich sein. Die Aufbringabschnitte 5 bis 8 können während einer Neuherstellung des Wellengrundkörpers 2 oder durch eine Bearbeitung einer herkömmlichen Läuferwelle ausgebildet werden, indem ein radial außen zu dem jeweiligen Aufbringabschnitt 5, 6, 7 bzw. 8 vorhandener, nicht gezeigter Materialabschnitt, an dem eine beschädigte Schaufelnut ausgebildet ist, durch Abtragung entfernt wird, um die herkömmliche Läuferwelle instand zu setzen. An dem Wellengrundkörper 2 werden vier Ringe angeordnet, wie es in den Figuren 2 und 3 gezeigt und nachfolgend beschrieben ist.

Fig. 2 zeigt einen schematischen Längsschnitt durch die in Fig. 1 gezeigte Läuferwelle 1 in einem weiteren Herstellungszustand. Dieser Herstellungszustand unterscheidet sich dadurch von dem in Fig. 1 gezeigten Herstellungszustand, dass auf den Wellengrundkörper 2 zwei Ringe 15 und 16 aus einem zweiten Werkstoff aufgebracht worden sind, wobei der zweite Werkstoff eine gleiche oder höhere Festigkeit und/oder eine höhere Korrosionsbeständigkeit als der erste Werkstoff aufweist. Jeder Ring 15 bzw. 16 ist durch Walzen oder Schmieden hergestellt.

Der Ring 15 ist bereits mittels Engspaltschweißen stoffschlüssig mit dem Wellengrundkörper 2 verbunden. Insbesondere ist der Ring 15 über eine mittels des Engspaltschweißens erzeugte Schweißnaht 17 mit dem Wellengrundkörper 2 verbunden. Die Schweißnaht 17 kann axial außenliegende, nicht gezeigte Außenabschnitte aus einem ersten Schweißgut und einen zwischen den Außenabschnitten liegenden, nicht gezeigten Mittelabschnitt aus einem zweiten Schweißgut aufweisen, wobei das erste Schweißgut eine höhere Korrosionsbeständigkeit als das zweite Schweißgut aufweist. Das Engspaltschweißen kann unter Verwendung von Elektronenstrahlschweißen oder WIG-Schweißen oder MAG-Schweißen durchgeführt werden. An dem Ring 15 ist mindestens eine Schaufelnut 18 zur Anordnung einer nicht gezeigten Laufschaufelreihe ausgebildet.

Der Ring 16 ist noch nicht mittels Engspaltschweißen stoffschlüssig mit dem Wellengrundkörper 2 bzw. dem Aufbringabschnitt 7 verbunden. Dies ist insbesondere der Detailvergrößerung 19 zu entnehmen. Die Detailvergrößerung 19 zeigt, dass der Ring 16 vor dem Engspaltschweißen über ein Zentriermittel koaxial zu dem Wellengrundkörper 2 ausgerichtet wird. Das Zentriermittel umfasst eine an dem Ring 16 ausgebildete, in Richtung des Aufbringabschnitts 7 weisende Schulter 21, die radial einen an dem Aufbringabschnitt 7 ausgebildeten, in Richtung des Rings 16 weisenden Vorsprung 22 kontaktiert. Die Schulter 21 und der Vorsprung 22 sind an einem dem Wellenende 10 abgewandten Ende des Rings 16 bzw. Aufbringabschnitts 7 angeordnet. Das Engspaltschweißen wird entsprechend den Pfeilen 20 von einer dem nächstliegend zu dem Ring 16 angeordneten Wellenende 10 des Wellengrundkörpers 2 zugewandten Seite aus durchgeführt.

Die Ringe 15 und 16 können nach Abschluss des jeweiligen Engspaltschweißens einer Wärmenachbehandlung unterzogen werden. Jeder Ring 15 bzw. 16 kann mit einer Breite hergestellt werden, die größer als eine Sollbreite des Rings 15 bzw. 16 ist, wobei die Breite des Rings 15 bzw. 16 nach Abschluss des Engspaltschweißens und nach einer Prüfung des Rings 15 bzw. 16 durch Materialabtragung auf die Sollbreite reduziert wird.

Fig. 3 zeigt einen schematischen Längsschnitt durch die in Fig. 1 gezeigte Läuferwelle 1 in einem weiteren Herstellungszustand. Dieser Herstellungszustand unterscheidet sich dadurch von dem in Fig. 2 gezeigten Herstellungszustand, dass auf den Wellengrundkörper 2 zwei weitere Ringe 23 und 24 aus einem zweiten Werkstoff aufgebracht worden sind, wobei der zweite Werkstoff eine gleiche oder höhere Festigkeit und/oder eine höhere Korrosionsbeständigkeit als der erste Werkstoff aufweist. Zudem ist auch an dem Ring 16 eine Schaufelnut 18 ausgebildet. Jeder Ring 23 bzw. 24 ist durch Walzen oder Schmieden hergestellt.

Die Ringe 23 und 24 sind mittels Engspaltschweißen stoffschlüssig mit dem Wellengrundkörper 2 verbunden. Insbesondere ist jeder Ring 23 bzw. 24 über eine mittels des Engspaltschweißens erzeugte Schweißnaht 17 mit dem Wellengrundkörper 2 verbunden. Jede Schweißnaht 17 kann axial außenliegende, nicht gezeigte Außenabschnitte aus einem ersten Schweißgut und einen zwischen den Außenabschnitten liegenden, nicht gezeigten Mittelabschnitt aus einem zweiten Schweißgut aufweisen, wobei das erste Schweißgut eine höhere Korrosionsbeständigkeit als das zweite Schweißgut aufweist. Das Engspaltschweißen kann unter Verwendung von Elektronenstrahlschweißen oder WIG-Schweißen oder MAG-Schweißen durchgeführt werden. Das Engspaltschweißen wird entsprechend den Pfeilen 20 von einer dem nächstliegend zu dem jeweiligen Ring 23 bzw. 24 angeordneten Wellenende 9 bzw. 10 des Wellengrundkörpers 2 zugewandten Seite aus durchgeführt. An den Ringen 23 und 24 ist jeweils eine Schaufelnut 18 zur Anordnung einer nicht gezeigten Laufschaufel ausgebildet.

Die Ringe 23 und 24 können nach Abschluss des jeweiligen Engspaltschweißens einer Wärmenachbehandlung unterzogen werden. Jeder Ring 23 bzw. 24 kann mit einer Breite hergestellt werden, die größer als eine Sollbreite des Rings 23 bzw. 24 ist, wobei die Breite des Rings 23 bzw. 24 nach Abschluss des Engspaltschweißens und nach einer Prüfung des Rings 23 bzw. 24 durch Materialabtragung auf die Sollbreite reduziert wird.

Folglich umfasst die Läuferwelle 1 zwei zu dem Wellenende 9 des Wellengrundkörpers 2 hin versetzt angeordnete, auf den Wellengrundkörper 2 aufgebrachte Ringe 15 und 23 und zwei zu dem Wellenende 10 des Wellengrundkörpers 2 hin versetzt angeordnete, auf den Wellengrundkörper 2 aufgebrachte Ringe 16 und 24.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Läuferwelle (1) für einen Turbinenläufer einer Turbine, insbesondere einer Dampfturbine,
aufweisend einen Wellengrundkörper (2) aus einem ersten Werkstoff und wenigstens einen auf den Wellengrundkörper (2) aufgebrachten Ring (15, 16, 23, 24) aus einem zweiten Werkstoff, wobei der zweite Werkstoff eine gleiche oder höhere Festigkeit und/oder eine höhere Korrosionsbeständigkeit als der erste Werkstoff aufweist,
wobei an dem Ring (15, 16, 23, 24) wenigstens eine Schaufelnut (18) ausgebildet ist, und wobei der Ring (15, 16, 23, 24) mittels Engspaltschweißen stoffschlüssig mit dem Wellengrundkörper (2) verbunden ist.

2. Läuferwelle (1) gemäß Anspruch 1,
wobei der Ring (15, 16, 23, 24) über wenigstens eine mittels des Engspaltschweißens erzeugte Schweißnaht (17) mit dem Wellengrundkörper (2) verbunden ist, wobei die Schweißnaht (17) axial außenliegender Außenabschnitte aus einem ersten Schweißgut und einen zwischen den Außenabschnitten liegenden Mittelabschnitt aus einem zweiten Schweißgut aufweist, und wobei das erste Schweißgut eine höhere Korrosionsbeständigkeit als das zweite Schweißgut aufweist.

3. Läuferwelle (1) gemäß Anspruch 1 oder 2,
wobei der Ring (15, 16, 23, 24) durch Walzen oder Schmieden hergestellt ist.

4. Läuferwelle (1) gemäß einem der Ansprüche 1 bis 3, aufweisend wenigstens zwei zu einem Wellenende (9, 10) des Wellengrundkörpers (2) hin versetzt angeordnete, auf den Wellengrundkörper (2) aufgebrachte Ringe (15, 16, 23, 24), wobei ein Außendurchmesser (11, 13) eines näher zu dem Wellenende (9, 10) angeordneten, den einen Ring (15, 16) tragenden Aufbringabschnitts (5, 8) des Wellengrundkörpers (2) kleiner ist als ein Außendurchmesser (12, 14) eines entfernter zu dem Wellenende (9, 10) angeordneten, den anderen Ring (23, 24) tragenden Aufbringabschnitts (6, 7) des Wellengrundkörpers (2).

5. Verfahren zum Herstellen einer Läuferwelle (1) eines Turbinenläufers einer Turbine,
insbesondere einer Dampfturbine, aufweisend die Schritte:
- Herstellen eines Wellengrundkörpers (2) aus einem ersten Werkstoff;
- Herstellen von wenigstens einem Ring (15, 16, 23, 24) aus einem zweiten Werkstoff, wobei der zweite Werkstoff eine gleiche oder höhere Festigkeit und/oder eine höhere Korrosionsbeständigkeit als der erste Werkstoff aufweist;
- Aufbringen des Rings (15, 16, 23, 24) auf den Wellengrundkörper (2);
- stoffschlüssiges Verbinden des Rings (15, 16, 23, 24) mit dem Wellengrundkörper (2) mittels Engspaltschweißen; und
- Ausbilden von wenigstens einer Schaufelnut (18) an dem Ring (15, 16, 23, 24).

6. Verfahren gemäß Anspruch 5,
wobei der Ring (15, 16, 23, 24) über wenigstens eine mittels des Engspaltschweißens erzeugte Schweißnaht (17) stoffschlüssig mit dem Wellengrundkörper (2) verbunden wird,
wobei die Schweißnaht (17) derart hergestellt wird, dass die Schweißnaht (17) axial außenliegender Außenabschnitte aus einem ersten Schweißgut und einen zwischen den Außenabschnitten liegenden Mittelabschnitt aus einem zweiten Schweißgut aufweist,
wobei das erste Schweißgut eine höhere Korrosionsbeständigkeit als das zweite Schweißgut aufweist.

7. Verfahren gemäß Anspruch 6,
wobei eine Schweißwurzel der Schweißnaht (17) zumindest teilweise außerhalb eines Spalts zwischen dem Ring (15, 16, 23, 24) und dem Wellengrundkörper (2) ausgebildet wird.

8. Verfahren gemäß einem der Ansprüche 5 bis 7,
wobei das Engspaltschweißen unter Verwendung von Elektronenstrahlschweißen oder WIG-Schweißen oder MAG-Schweißen durchgeführt wird.

9. Verfahren gemäß einem der Ansprüche 5 bis 8,
wobei das Engspaltschweißen von einer einem nächstliegend zu dem Ring (15, 16, 23, 24) angeordneten Wellenende (9, 10) des Wellengrundkörpers (2) zugewandten Seite aus durchgeführt wird.

10. Verfahren gemäß einem der Ansprüche 5 bis 9,
wobei der Ring (15, 16, 23, 24) vor dem Engspaltschweißen über wenigstens ein Zentriermittel koaxial zu dem Wellengrundkörper (2) ausgerichtet wird.

11. Verfahren gemäß einem der Ansprüche 5 bis 10,
wobei zumindest der Ring (15, 16, 23, 24) nach Abschluss des Engspaltschweißens einer Wärmenachbehandlung unterzogen wird.

12. Verfahren gemäß einem der Ansprüche 5 bis 11,
wobei der Ring (15, 16, 23, 24) durch Walzen oder Schmieden hergestellt wird.

13. Verfahren gemäß einem der Ansprüche 5 bis 12,
wobei der Ring (15, 16, 23, 24) mit einer Breite hergestellt wird, die größer als eine Sollbreite des Rings (15, 16, 23, 24) ist,
wobei die Breite des Rings (15, 16, 23, 24) nach Abschluss des Engspaltschweißens und nach einer Prüfung des Rings (15, 16, 23, 24) durch Materialabtragung auf die Sollbreite reduziert wird.

14. Verfahren gemäß einem der Ansprüche 5 bis 13,
wobei wenigstens zwei Ringe (15, 16, 23, 24) zu einem Wellenende (9, 10) des Wellengrundkörpers (2) hin versetzt auf den Wellengrundkörper (2) aufgebracht werden,
wobei der Wellengrundkörper (2) derart hergestellt wird, dass ein Außendurchmesser (11, 13) eines näher zu dem Wellenende (9, 10) angeordneten, den einen Ring (23, 24) tragenden Aufbringabschnitts (5, 8) des Wellengrundkörpers (2) kleiner ist als ein Außendurchmesser (12, 14) eines entfernter zu dem Wellenende (9, 10) angeordneten, den anderen Ring (15, 16) tragenden Aufbringabschnitts (6, 7) des Wellengrundkörpers (2).
